# DEMANDE DE BREVET EUROPEEN

(11) **EP 3 521 886 A1**
(43) Date de publication de la demande: **07.08.2019**
(21) Numéro de dépôt: 19155618.2
(22) Date de dépôt: 05.02.2019
(51) Int. Cl.: G02B 7/00, G02B 27/01, G02B 27/00

(54) **AFFICHEUR TETE HAUTE POUR VEHICULE AUTOMOBILE**

(30) Priorité: 05.02.2018 FR 1850954
(71) Demandeur: Valeo Comfort and Driving Assistance, 94046 Créteil Cedex (FR)
(72) Inventeur: DELPIERRE, Laurent, 94046 Créteil (FR); SAUZAY, Laurent, 94046 Créteil (FR); LE TOUMELIN, Loic, 74321 Bietigheim-Bissingen (DE)
(74) Mandataire: Delplanque, Arnaud

(57) **Abrégé**

L'invention concerne un afficheur tête haute pour véhicule automobile, comprenant au moins une voie d'aération obstruée par une membrane de filtration au niveau d'un conduit optique.

Plus précisément, un afficheur (2) selon l'invention comprend un écran rétroéclairé (12) positionné à une extrémité proximale (25) d'un conduit optique (24A), le conduit optique comportant au moins une voie d'aération (26) entre l'intérieur et l'extérieur dudit conduit. Selon l'invention, une membrane de filtration (28) obstrue chaque voie d'aération (26) de sorte à prévenir une accumulation de particules dans le conduit optique (24A). Ainsi, de façon avantageuse, l'invention permet de limiter l'accumulation de particules ou de poussières dans le conduit optique (24A) tout en en permettant le passage de l'air ambiant pour refroidir l'intérieur du conduit optique (24A).

## Description

### DOMAINE TECHNIQUE AUQUEL SE RAPPORTE L'INVENTION

La présente invention concerne un afficheur tête haute pour véhicule automobile.

### ARRIÈRE-PLAN TECHNOLOGIQUE

Pour le conducteur d'un véhicule automobile, il est particulièrement confortable de pouvoir visualiser des informations supplémentaires, relatives au fonctionnement du véhicule, à l'état du trafic, ou autres, sans avoir pour cela à détourner son regard de la route.

Il est connu dans ce but d'équiper un véhicule automobile avec un afficheur dit tête haute. Un tel afficheur utilise une réflexion partielle sur un élément situé devant le conducteur, par exemple une lame partiellement réfléchissante disposée entre le parebrise du véhicule et les yeux du conducteur, pour générer une image virtuelle comportant les informations à afficher dans l'environnement faisant face au véhicule.

Un afficheur tête haute comprend pour cela une source de lumière rétroéclairant un écran rétroéclairé partiellement transparent, de manière à cacher une partie de la lumière l'éclairant, tout en laissant passer une autre partie de la lumière afin de former un faisceau lumineux projetée sur la lame semi-réfléchissante.

L'afficheur tête haute comprend également un conduit optique amont interposé entre la source de lumière et l'écran rétroéclairé, et un conduit optique aval interposé entre l'écran rétroéclairé et la lame semi-réfléchissante. Les conduits optiques amont et aval permettent de s'assurer qu'aucune ombre parasite ne se forme sur l'image virtuelle, due à la présence d'un objet non désiré dans le faisceau lumineux émis par la source de lumière. Les termes « amont » et « aval » font référence au sens de propagation de la lumière dans les conduits optiques. Autrement dit, les conduits optiques forment une gaine de protection entourant le faisceau lumineux émis par la source de lumière, en s'étendant de la source de lumière vers la lame semi-réfléchissante.

L'absorption d'une partie de la lumière par l'écran rétroéclairé entraine son échauffement thermique. Cette chaleur thermique se trouve alors confinée dans le conduit optique, au niveau de sa face avant et de sa face arrière, entrainant plus ou moins rapidement son échauffement thermique. Au-delà d'une température dite critique, le fonctionnement de l'écran rétroéclairé est altéré ou pire l'écran rétroéclairé peut être endommagé.

Il est donc apparu nécessaire de trouver une solution prévenant d'un échauffement excessif de l'écran, au-delà de sa température critique, afin de préserver ses fonctionnalités dans le temps, tout en préservant le confinement du conduit optique.

### OBJET DE L'INVENTION

Dans ce contexte, la présente invention propose un afficheur tête haute pour véhicule automobile, comprenant un écran rétroéclairé positionné à une extrémité proximale d'un conduit optique, le conduit optique comportant au moins une voie d'aération entre l'intérieur et l'extérieur dudit conduit.

L'invention est remarquable en ce qu'une membrane de filtration obstrue au moins une voie d'aération (ou éventuellement en pratique chaque voie d'aération) de sorte à prévenir une accumulation dans le conduit optique de particules provenant de l'extérieur dudit conduit.

Autrement dit, le conduit optique comporte au moins une voie d'aération permettant de renouveler l'air présent dans le conduit optique afin de prévenir d'une élévation excessive de la température à l'intérieur du conduit optique, susceptible d'endommager l'écran rétroéclairé. De façon avantageuse, la ou les voies d'aération sont obstruées par une membrane de filtration empêchant l'introduction de particules ou poussières à l'intérieur du conduit optique. De ce fait, l'invention permet de préserver les avantages du conduit optique tout en facilitant un refroidissement plus efficace de l'écran rétroéclairé.

D'autres caractéristiques non limitatives et avantageuses du dispositif conforme à l'invention sont les suivantes :
- la membrane de filtration est configurée pour empêcher le passage de particules dont la plus petite dimension est égale ou supérieure à 0,07 µm, de préférence égale ou supérieure à 0,1 µm ;
- la membrane de filtration recouvre au moins une partie d'une face extérieure du conduit optique ;
- la membrane de filtration comporte une face adhésive permettant son maintien sur une face extérieure du conduit optique ;
- la membrane de filtration est configurée pour permettre à l'air ambiant de s'écouler à travers au moins une voie d'aération, selon un débit d'air égal ou supérieur à 10 Uh à une pression de 70 mbar ;
- le conduit optique comprend au moins deux voies d'aération traversant deux parois en vis-à-vis du conduit optique ;
- au moins deux voies d'aération sont en vis-à-vis ;
- au moins un ventilateur est agencé en vis-à-vis d'une voie d'aération de manière à favoriser une plus grande circulation d'air entre l'intérieur et l'extérieur du conduit optique ;
- au moins un ventilateur est agencé en vis-à-vis d'une face extérieure du conduit optique ;
- au moins une voie d'aération est agencée à une distance de l'extrémité proximale du conduit optique égale ou inférieure à 50%, d'une distance séparant l'extrémité proximale à une extrémité distale dudit conduit ;
- toutes les voies d'aération sont situées à une distance de l'extrémité proximale du conduit optique égale ou inférieure à 50%, d'une distance séparant l'extrémité proximale du conduit optique à une extrémité distale dudit conduit.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

### DESCRIPTION DES FIGURES

La description qui va suivre en regard des dessins annexés, donnés à titre d'exemples non limitatifs, fera bien comprendre en quoi consiste l'invention et comment elle peut être réalisée. Sur les dessins annexés :
- la figure 1 illustre une représentation schématique d'un afficheur tête haute d'un véhicule automobile selon l'invention ;
- la figure 2 illustre une vue de dessus d'une partie d'un afficheur tête haute selon l'invention, comprenant plusieurs voies d'aération obstruées par une membrane de filtration ;
- la figure 3 illustre une coupe longitudinale d'une partie d'un afficheur tête haute représentée à la figure 2 ;
- la figure 4 illustre une coupe longitudinale d'une variante de réalisation d'une partie d'un afficheur tête haute selon l'invention, représentée à la figure 2.

### DESCRIPTION DÉTAILLÉE D'UN EXEMPLE DE RÉALISATION

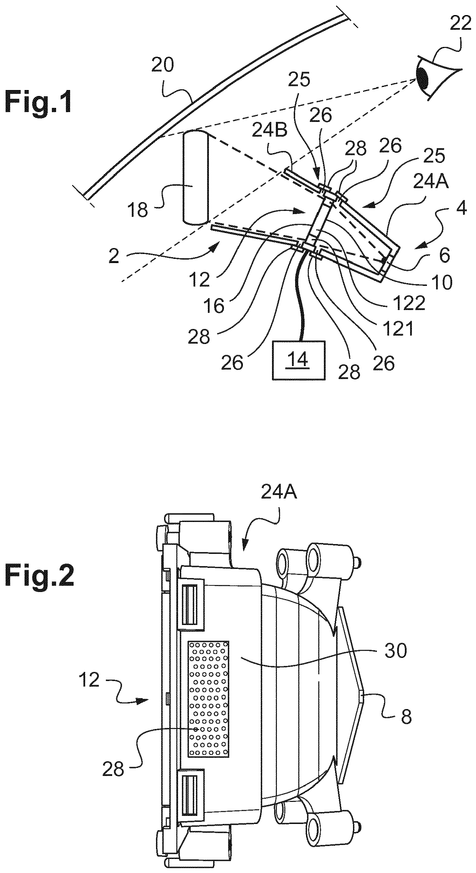

La figure 1 représente schématiquement les composants principaux d'un afficheur 2 tête haute selon l'invention, équipant un véhicule automobile. Un tel afficheur 2 comporte une unité de génération d'image 4 comprenant une source de lumière 6, montée fixement sur une plaque-support de circuit imprimé 8. La source de lumière est orientée de sorte à éclairer une face avant 10 d'un écran rétroéclairé 12. L'écran rétroéclairé comporte un cadre 121 entourant une matrice 122 constituée d'éléments dont la transmittance varie de façon contrôlée au cours du temps. Plus précisément, la matrice 122 est formée de cellules de cristaux liquides. L'opacité de chaque cellule est contrôlée par l'intermédiaire d'un module de contrôle 14 de manière à modifier localement et temporairement la transmittance de l'écran rétroéclairé 12, afin de générer un faisceau lumineux correspondant à au moins une information à afficher sous la forme d'une image pixélisée. Ce faisceau lumineux est ainsi transmis en sortie d'une face arrière 16 de l'écran rétroéclairé.

L'image virtuelle est générée pour le conducteur du véhicule automobile par réflexion du faisceau lumineux précité sur une lame 18 partiellement réfléchissante, également dénommée « combineur », placée dans son champ de vision. On peut ainsi afficher des informations dans le champ de vision du conducteur sans que celui-ci n'ait à détourner le regard de la route suivie par le véhicule. La lame 18 partiellement réfléchissante utilisée à cette fin est ici distincte du pare-brise 20 du véhicule automobile, et disposée de préférence entre le pare-brise 20 du véhicule et les yeux 22 du conducteur. En variante toutefois, le pare-brise du véhicule pourrait assurer la fonction de la lame partiellement réfléchissante.

L'afficheur 2 comprend également un conduit optique 24A amont, interposé entre la source de lumière 6 et l'écran rétroéclairé 12, et un conduit optique 24B aval interposé entre l'écran rétroéclairé 12 et la lame 18. Les termes « amont » et « aval » font référence au sens de propagation de la lumière émise par la source de lumière 6. La face interne du conduit optique 24A est configurée pour réfléchir la lumière émise par la source de lumière 6. Les conduits optiques amont et aval sont positionnés de manière à s'assurer qu'aucune ombre parasite ne se forme sur l'image virtuelle due à la présence de particules ou de poussières dans le faisceau de lumière émis par la source de lumière 6. Autrement dit, les conduits optiques 24 forment une gaine de protection entourant le faisceau lumineux émis par la source de lumière 6.

La lumière non transmise par la matrice 122 génère de la chaleur au niveau de la face avant 10 et de la face arrière 16 de l'écran rétroéclairé 12. Or, du fait que les conduits optiques 24 sont accolés à l'écran rétroéclairé 12 au niveau de leur extrémité proximale 25, cette chaleur est confinée au niveau de l'écran rétroéclairé. Le non-renouvellement de l'air à l'intérieur du conduit optique favorise l'échauffement thermique de l'écran rétroéclairé 12 au-delà d'une température dite critique, à partir de laquelle le fonctionnement de l'écran rétroéclairé est altéré ou endommagé. Afin de prévenir ce problème, l'état de la technique propose de percer le conduit optique en différents endroits pour former des voies d'aération permettant l'établissement, entre l'intérieur et l'extérieur du conduit optique, d'un phénomène de convection naturel de l'air ambiant. Toutefois, cette solution présente l'inconvénient de favoriser une accumulation de particules ou de poussières dans le conduit optique. Les propriétés du faisceau lumineux émis par la source de lumière 6 se trouvent alors altérées, notamment son intensité lumineuse.

L'invention résout ce problème technique en proposant l'utilisation d'une membrane de filtration 28, obstruant chaque voie d'aération 26, de sorte à prévenir une accumulation de particules dans le conduit optique.

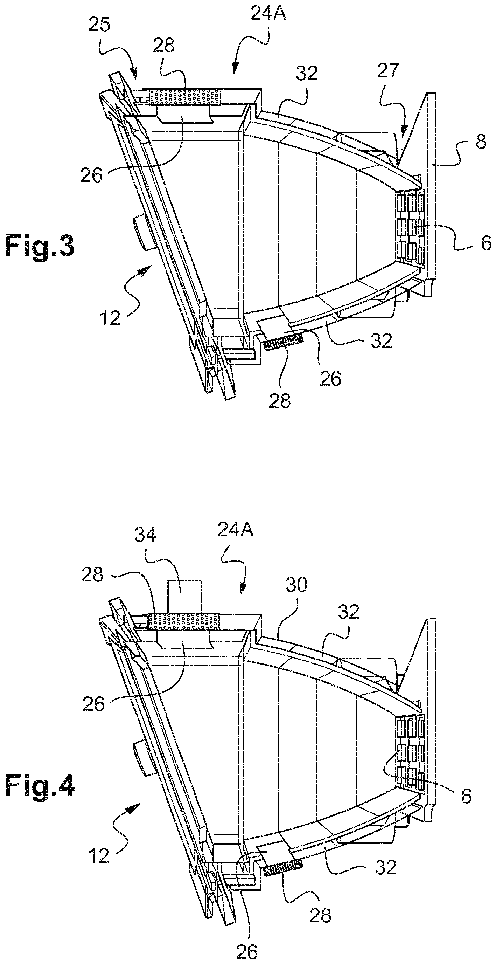

Comme illustré aux figures 2 et 3, les membranes de filtration 28 recouvrent les voies d'aération 26 au niveau des faces extérieures 30 du conduit optique 24A. Plus précisément, les membranes de filtration 28 sont configurées pour empêcher le passage de particules dont la plus petite dimension est égale ou supérieure à 0,07 µm, de préférence égale ou supérieure à 0,1 µm. Les membranes de filtration 28 comportent une face adhésive permettant leur positionnement et leur maintien sur une face extérieure 30 du conduit optique 24A. Les membranes de filtration 28 empêchent ainsi l'introduction de particules ou de poussières dans le conduit optique, tout en permettant un mouvement de convection de l'air ambiant entre l'intérieur et l'extérieur du conduit optique. De préférence, les membranes de filtration 28 sont configurées pour favoriser un écoulement de l'air ambiant à travers les voies d'aération, selon un débit d'air égal ou supérieur à 10 L/h à une pression de 70 mbar. Les membranes de filtration sont également de couleur sombre et configurées pour empêcher à la lumière ambiante de pénétrer dans le conduit optique, de manière à préserver l'intensité du faisceau lumineux émis par la source de lumière 6.

À titre d'exemple non limitatif, une membrane de filtration 28 selon l'invention peut par exemple être un produit commercialisé par la société « GORE », sous la référence « Automotive Vents for Exterior Lighting »,.

Comme illustré à la figure 3, le conduit optique 24A comporte au moins deux voies d'aération 26 traversant deux parois 32 du conduit optique en vis-à-vis. Bien entendu, les dimensions et les formes des voies d'aération 26 sont adaptées en fonction de la taille du conduit optique 24A et de la chaleur thermique générée par l'écran rétroéclairé 12 lorsqu'il est éclairé par la source de lumière 6. À titre d'exemples non limitatif, les voies d'aération délimitent des passages dont la surface au niveau d'une face extérieure 30 est comprise entre 5x15 mm² et 30x90mm², de préférence 10x30 mm² et 20x60 mm². Selon le présent exemple, les voies d'aération 26 sont de forme sensiblement parallélépipédique et chaque voie d'aération délimite un passage dont le volume est compris entre 5x15x40 mm³ et 30x90x50 mm³, de préférence 15x30x45 mm³ et 20x60x45 mm³.

Afin de favoriser un écoulement plus fluide de l'air dans le condit optique, les voies d'aérations 26 traversent des parois 32 opposées du conduit optique 24A. De préférence, les voies d'aération 26 sont agencées au plus proche de l'extrémité proximale 25 du conduit optique afin que l'air ambiant passant par lesdites voies s'écoule au plus près de l'écran rétroéclairé 12. Selon le présent exemple, toutes les voies d'aération 26 sont situées à une distance de l'extrémité proximale 25 du conduit optique 24A, égale ou inférieure à 50%, d'une distance séparant l'extrémité proximale 25 du conduit optique à une extrémité distale 27 dudit conduit. L'extrémité distale 27 est opposée à l'extrémité proximale 25 du conduit optique 24A. Selon le présent exemple, l'extrémité proximale 25 est accolée au circuit imprimé 8.

La figure 4 illustre à présent une variante de réalisation d'un afficheur tête haute selon l'invention. Selon cette variante, un ventilateur 34 est agencé sur le conduit optique 24A, en vis-à-vis d'une voie d'aération 26 obstruée par une membrane de filtration 28 décrite ci-dessus. Il est à noter que les objets identiques sur les figures ci-jointes, sont désignés par les mêmes références. Bien entendu, le fonctionnement du ventilateur 34 peut être contrôlé par l'intermédiaire d'une unité de commande non représentée sur la figure 4, en fonction du fonctionnement de l'afficheur 2 et/ou de la température de l'écran rétroéclairé 12. De préférence, le ventilateur 34 est configuré pour établir un écoulement d'air forcé à travers le conduit optique 24A qui soit suffisant pour permettre son refroidissement et ainsi éviter sa détérioration.

Il est à noter que la description ci-dessus ne vise pas à limiter l'invention à ces seuls exemples. L'homme du métier peut aisément réaliser d'autres formes et/ou agencement des voies d'aération obstruées par une membrane de filtration selon l'invention, au niveau du conduit optique 24A amont mais également au niveau du conduit optique 24B aval de l'afficheur 2 tête haute comme illustré par la figure 1.

## Revendications

1. Afficheur (2) tête haute pour véhicule automobile, comprenant un écran rétroéclairé (12) positionné à une extrémité proximale (25) d'un conduit optique (24A), le conduit optique comportant au moins une voie d'aération (26) entre l'intérieur et l'extérieur dudit conduit, **caractérisé en ce qu'**une membrane de filtration (28) obstrue ladite au moins une voie d'aération (26).

2. Afficheur (2) tête haute selon la revendication précédente, **caractérisé en ce que** la membrane de filtration (28) est configurée pour empêcher le passage de particules dont la plus petite dimension est égale ou supérieure à 0,07 µm.

3. Afficheur (2) tête haute selon l'une des revendications précédentes, **caractérisé en ce que** la membrane de filtration (28) recouvre au moins une partie d'une face extérieure (30) du conduit optique (24A).

4. Afficheur (2) tête haute selon l'une des revendications précédentes, **caractérisé en ce que** la membrane de filtration (28) comporte une face adhésive permettant son maintien sur une face extérieure (30) du conduit optique (24A).

5. Afficheur (2) tête haute selon l'une des revendications précédentes, **caractérisé en ce que** la membrane de filtration (28) est configurée pour permettre à l'air ambiant de s'écouler à travers au moins une voie d'aération (26), selon un débit d'air égal ou supérieur à 10 L/h à une pression de 70 mbar.

6. Afficheur (2) tête haute selon l'une des revendications précédentes, **caractérisé en ce que** le conduit optique (24A) comprend au moins deux voies d'aération (26) traversant deux parois (32) en vis-à-vis du conduit optique (24A).

7. Afficheur (2) tête haute selon la revendication précédente, **caractérisé en ce qu'**au moins deux voies d'aération (26) sont en vis-à-vis.

8. Afficheur (2) tête haute selon l'une des revendications précédentes, **caractérisé en ce qu'**au moins un ventilateur (34) est agencé en vis-à-vis d'une voie d'aération (26) de manière à favoriser une plus grande circulation d'air entre l'intérieur et l'extérieur du conduit optique (24A).

9. Afficheur (2) tête haute selon l'une des revendications précédentes, **caractérisé en ce qu'**au moins un ventilateur (34) est agencé en vis-à-vis d'une face extérieure (30) du conduit optique (24).

10. Afficheur (2) tête haute selon l'une des revendications précédentes, **caractérisé en ce qu'**au moins une voie d'aération (26) est agencée à une distance de l'extrémité proximale (25) du conduit optique (24A) égale ou inférieure à 50%, d'une distance séparant l'extrémité proximale (25) à une extrémité distale (27) dudit conduit.

11. Afficheur (2) tête haute selon l'une des revendications précédentes, **caractérisé en ce que** toutes les voies d'aération (26) sont situées à une distance de l'extrémité proximale (25) du conduit optique (24A) égale ou inférieure à 50%, d'une distance séparant l'extrémité proximale (25) du conduit optique à une extrémité distale (27) dudit conduit.
